# EUROPEAN PATENT APPLICATION

(11) **EP 0 827 978 A1**
(43) Date of publication of application: **11.03.1998**
(21) Application number: 97114991.9
(22) Date of filing: 29.08.1997
(51) Int. Cl.: C08L 21/00, C08L 23/04, C08J 5/18, C08J 3/22

(54) **Package for compounding rubber, compounded rubber and tire having tread thereof**

(30) Priority: 06.09.1996 US 709374
(71) Applicant: THE GOODYEAR TIRE & RUBBER COMPANY, Akron, Ohio 44316-0001 (US)
(72) Inventor: McCandless, James Robert, Uniontown, Ohio 44685 (US); Kansupada, Bharat Kanchanlal, Mogadore, Ohio 44260 (US)
(74) Representative: Leitz, Paul

(57) **Abstract**

A package comprised of at least one compounding ingredient for unvulcanized rubber contained in a protective film of a thermoplastic composition composed of ultra low density polyethylene as a copolymer of ethylene and hexene or as a copolymer of ethylene and aliphatic olefin having 6-8 carbon atoms blended with ethylene vinyl acetate copolymer. For such purposes, the said thermoplastic film can be in the form of a bag thereof. The invention further relates to a compounded rubber comprised of a mixture of unsaturated rubber and a package of compounding ingredients contained in the said thermoplastic film. The invention also relates to a tire having a component, such as a tread, composed of such compounded rubber.

## Description

### Technical Field

This invention relates to packaged materials for compounding rubber, to rubber compounded therewith and to a tire having a component such as a tread of such compounded rubber.

### Background

Unvulcanized rubber and/or compounding ingredients therefor are often packaged in thermoplastic film, particularly where the film is in the form of a bag thereof.

A purpose for the film packaging is to minimize loss of material, such as by spillage or by airborne losses, e.g. compounding ingredients for rubber; to minimize a tendency for some of such ingredients to cake together in high humidity situations; and to maximize ease of handling, all of the rubber mixing operation for a rubber products manufacturing facility.

Thus, such packaging of rubber compounding ingredients with a thermoplastic film is often found to be useful for adding compounding ingredients to rubber on a uniform basis.

However, various criteria are important for selecting a suitable thermoplastic film material, particularly a bag thereof, for such purpose.

In one aspect, the film should readily disperse in the rubber to which it is added and mixed.

It is important to appreciate that, for many rubber mixing operations, rubber is mixed with its compounding ingredients in two or more sequential mixing stages. Conventionally, such mixing stages consist of a first, or at least one initial non-productive, mixing stage and a second, or at least one subsequent productive, mixing stage. Additional mixing stages can also be used. In such circumstance, rubber is first mixed in a non-productive mixing stage(s) with its compounding ingredients exclusive of curatives such as sulfur and cure accelerators. In the non-productive mix stage(s), rubber, carbon black, rubber processing oil and other additives, normally exclusive of curatives, are mixed. In the non-productive mixing stage(s), the mixing temperatures are usually relatively high, such as, for example, about 130°C to about 170°C.

In a subsequent productive mixing stage, sulfur and other curatives are added to the non-productive mix batch. Processing oil is not conventionally added to the productive mix stage except perhaps a very small amount to reduce the dusting of the ingredients. A lower mixing temperature is used such as, for example, about 90°C to about 120°C, because of the curatives being present and the mixing can occur over a considerably shorter period of time as compared to the non-productive mixing stage(s).

While various thermoplastic films may be useful for adding basic compounding ingredients to the non-productive mixing stage and which have been found to satisfactorily disperse in the rubber mixture under such circumstances, special considerations have to be given to the productive mixing stage, which is normally considered as being the last mixing stage.

As heretofore pointed out, the productive mix stage is conventionally operated at a lower temperature (e.g. 90 - 120°C) than that of its preceding non-productive mix stage(s).

Therefore, for the aforesaid thermoplastic film to be satisfactory for introducing rubber compounding ingredients into the productive mix stage, not only should the film have a softening point below the mixing stage's rubber composition mixing temperature, but it needs to adequately dispersed within the compounded rubber at the lower mix temperature and in a relatively short period of time.

Normally, in the non-productive mix stage, about 10 to about 40 phr of processing oil is included.

However, in a more specific case where a relative high loading of oil is used in the non-productive mix stage for the rubber composition, the productive mix stage is typically operated at a somewhat lower temperature (e.g. 90 - 100°C) and, perhaps more importantly, a lower mix shear is inherently developed due to the highly oil loaded rubber composition.

Thus, with the reduced shear, it becomes more difficult to adequately disperse the aforesaid film in the rubber composition in the productive mix stage over a relatively short period of time.

Thus, the film should quickly melt and flow under the rubber mixing conditions in the productive mix stage which include its mixing temperature and mixing shear forces. Further, the film should disperse into the rubber under the mixing conditions over a very short period of time.

Accordingly, such thermoplastic film should have a softening point (or melting point) below about 75°C, or at least below about 77°C and flow under the aforesaid mixing shear forces in the productive mix stage, including circumstances where a relatively large amount of oil has been mixed with the rubber in the non-productive mix stage which reduces the mixing shear forces.

The softening points of the films has been one of the important factors for their selection as well as other factors, including their relative strength and their compatibility with the rubber and associated resulting compounded rubber properties.

Overall strength of the film and resistance of the film to chemical action of certain compounding ingredients such as, for example, antioxidants, antiozonants, oleic acid, and napthenic oil are also important considerations.

A suitable overall strength of the film can be determined by filling a bag composed of the thermoplastic film having a thickness of about 2 mils, or 0.05 mm and at about 23°C with one or more of rubber compounding ingredients without rubber processing oil.

A suitable chemical resistance to certain of rubber compounding ingredients can be determined by filling a bag composed of the thermoplastic film having a thickness of about 2 mils (0.05 mm) with one or more of oleic acid, non-reactive phenolformaldehyde resin, hexamethoxymelamine and insoluble sulfur/oil blends for rubber compounding purposes storing the filled bag at about 23°C for about 7 days and then lifting the bag without supporting its bottom. If the bag does not leak through its film, or the film does not rupture, the film is considered as being acceptable under the chemical resistance test and also the aforesaid strength test. The chemical resistivity of the film is deemed to be not suitable if the film dissolves or leaks it contents through the film itself.

Therefore, for a film to be considered to be suitable for the purposes of this invention, it is required to have a melting point below 75°C, or at least below 77°C, of a suitable overall strength, and a suitable chemical resistivity and an ability to adequately disperse in rubber when mixed therein over a relatively short period of time at a temperature of about 90 to about 105°C.

The aforesaid dispersion requirement extends to highly oil loaded rubber compositions blends to which relative large amounts of oil is added during the mixing of packaged compounding ingredients with the rubber in the non-productive mix stage (e.g. by adding from 60 to 90 phr of oil).

Thus, the selection of a suitable film can only be determined by experimentation concerning its strength, chemical resistivity and dispersion-in-rubber ability under prescribed circumstances. In addition, the film, as a rubber ingredient bag, should not have deleterious effect on the compounded rubber's physical properties such as, for example, tensile strength and elongation.

Polyethylene, while it has been used for rubber packaging and sometimes rubber compounding ingredient packaging in some circumstances, is often considered to be disadvantageous because, when mixed with unvulcanized rubber, it does not usually disperse sufficiently well in the rubber blend at a temperature of about 90°C to about 100°C.

Films of ethylene/vinyl acetate copolymer and of syndiotactic polybutadiene have been used for packaging rubber compounding ingredients for rubber mixing purposes.

Syndiotactic polybutadiene has also been used for such purpose but has a softening point higher than desired for some purposes (eg. 92°C) and has in sufficient chemical resistance to unsaturated fatty acids.

It is still desired to provide films for such packaging purposes which will melt below the rubber mixing temperatures and flow under the mixing shear conditions to adequately disperse in the rubber during relatively short mixing times, as well as to exhibit good strength and chemical resistance. The films are, therefore, desired to be suitable for preparing packaged rubber compounding ingredients for mixing with rubber and to provide rubber compounded with such a package.

In the description of this invention, the term "phr" relates to "parts by weight per 100 parts by weight rubber".

A softening point of polymers, as used in the description of this invention may be conveniently be determined by DSC (differential scanning calorimetry) analysis with a rate of temperature rise of 10°C per minute. Such technique is well known to those having skill in such art. Some polymers exhibit a rather broad melting "point" and so is referred to herein as a softening point.

### Disclosure and Practice of Invention

In accordance with this invention a package is provided which comprises (A) compounding ingredients for unvulcanized rubber packaged in (B) a protective film having a thickness in the range of about 0.02 to about 0.08, preferably about 0.04 to about 0.06, mm of a thermoplastic film, where, based on 100 parts by weight, such thermoplastic film is composed of (i) an ultra low density polyethylene (ULDPE) as a copolymer of about 70 to about 85 percent units derived from ethylene and, correspondingly about 30 to about 15 percent units derived from hexene or (ii) about 70 to about 90, preferably about 75 to about 85, parts by weight ultra low density polyethylene (ULDPE) as a copolymer of about 70 to about 85 percent units derived from ethylene and about 30 to about 15 percent units derived from an aliphatic monoolefin containing 6 to 8 carbon atoms and, correspondingly, about 30 to about 10, preferably about 25 to about 15, parts by weight ethylene/vinyl acetate copolymer (EVA) containing about 24 to about 32, preferably about 25 to about 30, weight percent vinyl acetate and where said film is characterized by having a softening point in the range of about 70°C to about 77°C; wherein said ULDPE has a specific gravity within a range of about 0.88 to about 0.89 and a softening point within a range of about 70 to about 77°C and wherein said EVA has a softening point within a range of about 70 to about 77°C.

It is understood that the film composite blend of this invention desirably can contain various typical lubricants, fillers, pigments and dyes and stabilizers.

The ultra low density polyethylene (ULDPE) thermoplastic required by this invention is readily distinguished from low density polyethylene (LDPE), since LDPE, in contrast, typically has a softening point in a range of about 100 to about 115°C, and a specific gravity in a range of about 0.9 to about 0.92. It is understood that an LDPE may be a copolymer of about 90 to about 95 percent ethylene and about 5 to about 10 percent of a low molecular weight diene.

In practice, for the ULDPE copolymer composed of both units derived from ethylene and aliphatic monoolefin, the monoolefin is preferably selected from hexene and octene.

In the practice of this invention, a method of compounding rubber is provided and the resulting compounded rubber, which comprises mixing unvulcanized rubber, particularly high unsaturation rubber, with the package of this invention containing conventional rubber compounding ingredients optionally followed by sulfur curing said prepared mixture of rubber, packaging film and packaged ingredients. The invention is particularly applicable where about 2 to about 40 and even up to about 90 phr of rubber processing oil is mixed with the rubber, usually exclusive of (in addition to) the ingredients in the said package.

In a further practice of this invention, such rubber composition is molded and sulfur vulcanised under conditions of elevated temperature (140°C to 160°C) and pressure to form a shaped rubber product.

In an additional practice of this invention, a tire is provided having a component composed of such shaped and cured rubber composition such as a circumferential tread.

In one aspect of this invention, the aforesaid package is of compounding ingredients comprised of sulfur, sulfur cure accelerator(s) and sulfur cure activators for rubber. Such types of curative materials are well known to those having skill in the rubber compounding art. As mentioned herein, such ingredients can contain a very, very small amount of oil.

In another aspect of this invention, a method of compounding rubber comprises the steps of (A) blending an unvulcanized unsaturated diene-based rubber (for example, styrene/butadiene copolymer elastomers whether organic solution polymerization prepared or aqueous emulsion polymerization prepared, cis 1,4-polyisoprene, cis 1,4-polybutadiene, isoprene/butadiene, styrene/isoprene/butadiene, 3,4-polyisoprene, and the like) and rubber compounding ingredients therefor, exclusive of sulfur and sulfur cure accelerators therefor in at least one non-productive mixing stage and (B) in a subsequent productive mixing stage, blending at least one package comprised of sulfur and sulfur cure accelerator(s) for rubber in a bag of said thermoplastic film with such non-productive blend (A).

Various rubber compounding ingredients are contemplated for packaging according to this invention and then compounded with unvulcanized rubber. Representative of the various contemplated compounding ingredients are fillers, such as clay, silicates, calcium carbonate, accelerators, such as, for example, tetramethylthiuram disulfide, benzothiazyl disulfide and the like; antioxidants and antiozonants, curatives such as sulfur and accelerators, titanium dioxide, reinforcing pigments, such as carbon black, zinc oxide and hydrated silicon compounds; and processing aids, such as silicon dioxide, pumice, and stearate and which can include a very small rubber amount of processing oil when mixed with at least one other of such compounding ingredient.

In this manner, while the term "packaged" primarily relates to bagged compounding ingredients, it can also relate to compounding ingredients which are otherwise wrapped in the film.

For the purposes of the description of this invention, the term "rubber compounding ingredients", to be packaged with the said thermoplastic film for the productive mix stage, does not include rubber processing oils, except for a very small amount which aids in the reduction of dusting of the compounding ingredients which is typically less than about 2 phr.

Films of this invention have been observed to disperse readily in a rubber compound when using conventional rubber mixing equipment.

The practice of this invention is further illustrated by reference to the following examples which is intended to be representative rather than restrictive of the scope of the invention. Unless otherwise indicated, all parts and percentages are by weight.

### EXAMPLE I

Thermoplastic films, having a thickness of about 2 mil, or about 0.05 mm, were evaluated for use as a packaging material for rubber compounding ingredients to be used for mixing with rubber.

The thermoplastic films were blends of ultra low density polyethylene (ULDPE) with various amounts of ethylene/vinyl acetate (EVA) copolymer.

The blends are illustrated in the following Table 1 and referenced herein as Film A, Film B and Film C with the amounts of ULDPE and EVA being reported as parts by weight based on 100 parts by weight of the polymer blend. Each of the films also contained small amounts of lubricant(s), filler(s), stabilizer(s) and dye.

**Table 1**

| Materials | Film A | Film B | Film C | Film D | Film E |
|---|---|---|---|---|---|
| ULDPE (octene) | 90 | 80 | 70 | 100 | 0 |
| ULDPE (hexene) | 0 | 0 | 0 | 0 | 100 |
| EVA | 10 | 20 | 30 | 0 | 0 |

1. Ultra low density polyethylene copolymer obtainable from Dow Chemical Company understood to be composed of about 80 percent units derived from ethylene and about 20 percent units derived from octene and having a specific gravity of about 0.89, a softening point of about 70 to 77°C.
2. Ultra low density polyethylene copolymer obtainable from Exxon Chemical Company understood to be composed of about 80 percent units derived from ethylene and about 20 percent units derived from hexene and having a specific gravity of about 0.89, a softening point of about 70 to 77°C.
3. Ethylene/vinyl acetate copolymer obtainable from Exxon Chemical Company understood to contain about 27 percent units derived from vinyl acetate and having a softening point of about 75°C.

The thermoplastic films were evaluated for physical and observed properties which are reported in the following Table 2. Film D is a film composed of the ULDPE (octene) without the EVA and Film E is a film composed of the ULDPE (hexene) also without the EVA.

**Table 2**

| Property | Film A | Film B | Film C | Film D | Film E |
|---|---|---|---|---|---|
| Percent EVA | 10 | 20 | 30 | 0 | 0 |
| Elmendorf Tear (g/mil) | 91 | 142 | 175 | 83 | 240 |
| Tensile (MPa) | 20.8 | 25.2 | 23.9 | 28.9 | 57.7 |
| Elongation (%) | 531 | 560 | 548 | 451 | 530 |
| East of Film/Bag mfg | ok | ok | poor | ok | ok |

These results indicate that films of ULDPE (octene) containing 20 and 30 percent of the EVA (Film B and Film C, respectively) had considerably higher tear resistance (Elmendorf tear, an ASTM D1922 procedure) than Film A, ULDPE(octene), with 10 percent EVA and clearly better than the Film D, ULDPE(octene) with no EVA. However, it is considered herein that the film containing 30 percent of the EVA (Film C) would be more difficult to process in conventional blending equipment for blending the ULDPE and EVA than the film containing the 20 percent EVA (Film B). In addition, Film E, ULDPE(hexene) also had better Elmendorf tear than Films A, B, C and D, which used the ULDPE(octene).

It is considered herein that, of the three films tested, Film B and Film E would therefor be preferable for use in rubber compounding operations. Accordingly, Film B and Film E were selected for relative strength and chemical stability as well as rubber composition dispersibility properties. In practice, it was found that some, namely a relatively small percentage, of the bags of Film D, containing rubber compounding ingredients, tore and/or punctured too easily to be practical for use in extended rubber product manufacturing operations.

### EXAMPLE II

A series of individual bags, each composed of individual sheets of Film B, Film D and Film E as a control, to were subjected to a relative strength and chemical stability test. Each of the bags had dimensions of about 23 inches by 26 inches, or about 58 cm by about 66 cm, and composed of the respective film folded with its two sides heat sealed thereby leaving its top open.

A series of each of the Film B, D and E bags was each filled with about 20 pounds, or about 9 kg, individually, non-reactive phenolformaldehyde resin, paraphenylene diamine and oil treated sulfur and three to four pounds (about 1.4 to 1.8 kg) each of oleic acid and hexamethoxymelamine, thus, representing at least eighteen bags to be tested.

The filled bags were stored for about 7 days, at room temperature, or at about 23°C, except for the bags of oleic acid and of hexamethoxymelamine which were stored for about 24 hours, following which they were each lifted without supporting the bottom of the bags. The bags made, individually, of Films B, D or E did not rupture or tear. Therefore, Films B, D and E were considered to have passed the relative strength and chemical stability tests.

### EXAMPLE III

Films B, D and E were individually evaluated for their dispersibility in rubber. For such evaluation, the films were cut into square pieces with a dimension of about 1 inch by 1 inch (2.5 by 2.5 cm) and blended in a rubber composition mixture, in amounts representing one and five times (1x and 5x) an amount considered to be representative, or typical, of the amount of film which could be expected to be introduced into the rubber if the rubber cure compounding ingredients for a productive rubber mix stage were to be used. For this Example, such typical amount of film for a bag to be used in the productive mix stage was deemed to be about 0.02 phr.

The rubber composition used for the film dispersibility test was comprised of the following formulation shown in Table 3 and the compositions are referred to as Ex B, Ex D and Ex E, corresponding to Film B, Film D and Film E.

**Table 3**

| Material | Parts (Rounded) |
|---|---|
| | |

| A. First Mixing Stage (about 115°C)¹ | |
|---|---|
| SBR Rubber, oil extended | 137.5 |
| (37.5 phr oil) | |
| Carbon Black (N110) | 130 |
| Rubber Processing Oil | 32 |
| Tackifier Resin | 21 |
| Stearic Acid | 5 |
| Zinc Oxide | 5 |
| Antidegradant(s) | 2 |

| B. Second Mixing Stage (about 93°C)¹ | |
|---|---|
| Film² | variable |
| Accelerator, Sulfenamide Type | 3 |
| Tetramethyl Thiuram Disulfide | 1.5 |
| Sulfur | 1 |

| | |
|---|---|
| 1. The discharge temperature from the rubber mixing apparatus. | |
| 2. Film B, Film D and Film E, respectively, in different batches of the formulation. | |

The rubber compositions (Ex B, Ex D and Ex E, individually) were discharged from the second, productive internal rubber mixer when the mixture reached about 93°C and were visually inspected for any undispersed film. No undispersed film was observed, indicating that the dispersion test was successful for the Films B, D and E.

The rubber blend was then banded on a cylindrical mill and samples taken for visual evaluation for dispersibility of the film in the rubber. No clumps of film or other residue of film was observed in the rubber composition, also indicating that the dispersion test was successful for the Film B, Film D and Film E.

### EXAMPLE IV

Samples of the rubber compositions were prepared according to Example III, which contain the Film B in 1x and 5x amounts (referred to herein as compositions Ex B1 and Ex B5, respectively).

Samples of the rubber compositions were prepared according to Example III, which contain the Film D in 1x and 5x amounts (referred to herein as compositions Ex D1 and Ex D5, respectively).

Samples of the rubber compositions were prepared according to Example III, which contain the Film E in 1x and 5x amounts (referred to herein as compositions Ex E1 and Ex E5, respectively).

Samples of the rubber compositions were prepared according to Example III without any of the Film B, D or E and is referred to herein as a control composition G.

Samples of the rubber compositions (about 4 inches by about 6 inches, or about 10 cm by about 15 cm) were prepared and cured at about 150°C for about 18 minutes and the cured samples visually examined. No clumps or pieces of the film were observed in the cured sheet, further indicating that the Films B, D and E passed the rubber composition dispersibility test.

The cured rubber samples Ex B1 and Ex B5, Ex D1 and Ex D5 and Ex E1 and Ex E5 were further evaluated for tear resistance of the rubber compositions. All of the experimental rubber compositions demonstrated tear resistance comparable the control rubber composition Ex G and no visually observed undispersed film in both uncured and cured rubber samples.

Therefore, it is considered that Film B, D and E passed the rubber dispersibility test according to the physical properties of the resultant cured rubber being similar to those of the control, without any of the Films, and thus, not appreciably affected by the presence of the dispersed film.

In conclusion, results of the tests of Examples I, II, III and IV show that the ULDPE/EVA film, and particularly Film B and Film E, passed tests designed to determine their suitability for use as packaging films for rubber compounding ingredients which are to be mixed and cured with sulfur vulcanizable rubber in a rubber manufacturing operation.

While certain representative embodiments and details have been shown for the purpose of illustrating the invention, it will be apparent to those skilled in this art that various changes and modifications may be made therein without departing from the spirit or scope of the invention.

## Claims

1. A package characterized by comprising (A) compounding ingredients for unvulcanized rubber packaged in (B) a protective film having a thickness in the range of 0.02 to 0.08, mm of a thermoplastic film, where, based on 100 parts by weight, such thermoplastic film is composed of (i) an ultra low density polyethylene (ULDPE) as a copolymer of 70 to 85 percent units derived from ethylene and, correspondingly 30 to 15 percent units derived from hexene or (ii) 70 to 90 parts by weight ultra low density polyethylene (ULDPE) as a copolymer of 70 to 85 percent units derived from ethylene and 30 to 15 percent units derived from an aliphatic monoolefin containing 6 to 8 carbon atoms and, correspondingly, 30 to 10 parts by weight ethylene/vinyl acetate copolymer (EVA) containing 24 to 32 weight percent vinyl acetate and where said film is characterized by having a softening point in the range of 70°C to 75°C; wherein said ULDPE copolymers have a specific gravity within a range of 0.88 to 0.89 and a softening point within a range of 70 to 77°C and wherein said EVA has a softening point within a range of 70 to 77°C.

2. The package of claim 1 characterized in that said film is composed of ULDPE as a copolymer of ethylene and one or more of hexene and octene and is exclusive of said ethylene/vinyl acetate copolymer.

3. The package of claim 1 characterized in that said film is composed of (i) ULDPE as a copolymer of ethylene and one or more of hexene and octene and (ii) said ethylene/vinyl acetate copolymer.

4. The package of any of the preceding claims characterized in that said compounding ingredients are comprised of at least one of clay, silicates, calcium carbonate, tetramethylthiuram disulfide, benzothiazyl disulfide, type antioxidants, antiozonants, curatives selected from sulfur, and accelerators, titanium dioxide, reinforcing pigments selected from carbon black, zinc oxide and hydrated silicon compounds; silicon dioxide, and also a very small amount of rubber processing oil when mixed with at least one other of such compounding ingredients.

5. The package of any of the preceding claims 1-3 characterized in that the compounding ingredients are comprised of sulfur and sulfur cure accelerator(s) and sulfur cure activators for rubber.

6. A method of compounding rubber which is characterized by comprising the steps of (A) blending an unvulcanized unsaturated diene-based elastomer and rubber compounding ingredients therefor, exclusive of sulfur and sulfur cure accelerators for rubber in at least one non-productive mixing stage; and (B) in a subsequent, productive mixing stage, blending at least one package of claim 5 with such non-productive blend (A).

7. A compounded rubber characterized by being prepared according to the method of claim 6.

8. A tire having a tread of the compounded rubber according to claim 7.
